(19) Europäisches Patentamt / European Patent Office / Office européen des brevets

(11) **EP 4 712 177 A1**

(12) **EUROPEAN PATENT APPLICATION**

(43) Date of publication:
**18.03.2026 Bulletin 2026/12**

(21) Application number: **24199656.0**

(22) Date of filing: **11.09.2024**

(51) International Patent Classification (IPC):
**H01M 8/18** *(2006.01)*

(52) Cooperative Patent Classification (CPC):
**H01M 8/188; H01M 2300/0005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VoltStorage GmbH**
**80935 München (DE)**

(72) Inventors:
• **Alper, John**
**80797 München (DE)**
• **Zec, Nebojsa**
**81245 München (DE)**

(74) Representative: **Grünecker Patent- und Rechtsanwälte PartG mbB Leopoldstraße 4 80802 München (DE)**

(54) **ELECTROLYTE COMPOSITION FOR ALL-IRON REDOX FLOW BATTERIES**

(57) The invention provides an electrolyte for use in an all-iron redox flow battery, comprising an aqueous solution of an $Fe^{2+}$ salt; a first cation additive being aluminium $Al^{3+}$; and a second cation additive selected from the group consisting of $Na^+$, $K^+$, $Ca^{2+}$, $Mg^{2+}$ or $NH_4^+$.

| | Formulation / Composition | pH value of the electrolyte and energy efficiency (EE) of the ISB after 15 charge/discharge cycles | |
|---|---|---|---|
| | | pH | EE(%) |
| 1 | 2.5M FeCl2 + 2M NH4Cl | 4,3 | 75,08 |
| 2 | 2.5M FeCl2 + 2M NaCl | 3,95 | 69,09 |
| 3 | 2.5M FeCl2 + 2M KCl | 4,5 | 74,57 |
| 4 | 2.5M FeCl2 + 2M MgCl2 | 4,09 | 76,85 |
| 5 | 2.5M FeCl2 + 2M CaCl2 | 3,91 | 77,6 |
| 6 | 2.5M FeCl2 + 0.03M AlCl3 (4 g/l) | 3,16 | 68,85 |
| 7 | 2.5M FeCl2 + 0.30M AlCl3 (40 g/l) | 1,85 | 63,98 |
| 8 | 2.5M FeCl2 + 0.66M AlCl3 (88 g/l) | 1,43 | 60,12 |
| 9 | 2.5M FeCl2 + 0.03M AlCl3 + 2M CaCl2 | 2,35 | 67,63 |
| 10 | 2.5M FeCl2 + 0.03M AlCl3 + 2M NaCl | 2,9 | 65,22 |
| 11 | 2.5M FeCl2 + 0.03M AlCl3 + 2M KCl | 3,25 | 69,27 |
| 12 | 2.5M FeCl2 + 0.03M AlCl3 + 0.66M CaCl2 + 0.24M MgCl2 | 2,6 | 69,38 |
| 13 | 2.5M FeCl2 + 0.03M AlCl3 + 0.66M CaCl2 + 0.24M MgCl2 + 1.5M NaCl | 2,85 | 69,37 |

**FIG. 1**

EP 4 712 177 A1

**Description**

**Field of the Invention**

The invention relates to an electrolyte for an all-iron redox flow battery.

**Prior Art**

Different redox flow batteries are known in art. A particular type is the iron salt battery (ISB, all-iron redox flow battery) which has the advantage of being cost efficient due to using only iron in different oxidation states as electrolyte. It comprises two tanks, which in the uncharged state store electrolytes of dissolved Fe(II) ions. The electrolyte is pumped into the battery cell which includes two separated half-cells. The base electrolyte comprises Fe(II) salts which are dissolved in water, where Cl$^-$ ions may be used as counter ions. Fe(II) chloride is preferred since the conductivity thereof is high.

Electrolyte for the positive tank is pumped through the positive half-cell, and electrolyte for the negative tank is pumped through the negative half-cell. The electrochemical reaction takes place at the electrodes within each half-cell. The half-cells are separated by a separator. This can be an anionic exchange membrane, a cationic exchange membrane or a porous separator. Energy storage is based on the electrochemical reaction of iron. During charge, Fe(II) oxidizes to Fe(III) in the positive half-cell while in the negative half-cell Fe(II) is reduced to Fe(0). The latter reaction in the negative half-cell is also called the plating reaction, as Fe(0) is deposited on the negative electrode. During discharge, the plated Fe(0) is dissolved into the electrolyte forming Fe(II), while Fe(III) reduces to Fe(II) in the positive half-cell.

Specifically, an iron salt battery utilizes the following chemistry to store electrical energy:

$$\text{Positive half-cell:} \quad Fe^{2+} \rightarrow Fe^{3+} + e^- \quad\quad E^0 = +0.77 \text{ V (vs. SHE)}$$
$$\text{Negative half-cell:} \quad Fe^{2+} + 2\,e^- \rightarrow Fe^0_{(s)} \quad\quad E^0 = -0.44 \text{ V (vs. SHE)}$$

Here SHE refers to a standard hydrogen electrode. The SHE is an electrode that utilizes the redox reaction between hydrogen gas and hydrogen ions in solution. It is given a potential of exactly 0 volts, and all other electrode potentials are measured relative to this value. The reverse reaction releases electrical energy.

During the reaction, the charge within the electrolyte is balanced by migration of charged species through the separator. A crossover of Fe(III) from the positive to the negative half-cell may lead to coulombic efficiency loss, since it will react with the Fe(0) on the negative side.

During charge, hydrogen will evolve due to the hydrogen evolution reaction (HER). The acidic protons H$^+$ in solution react to form hydrogen gas whilst iron(II) oxidizes in the positive half-cell:

$$\text{Positive half-cell:} \quad Fe^{2+}(aq) \rightarrow Fe^{3+}(aq) + e^-$$
$$\text{HER at negative half-cell:} \quad H^+ + e^- \rightarrow \tfrac{1}{2} H_2(g)$$

This has the effect that Fe$^{3+}$ will be overabundant in the positive electrolyte, leading to an unbalanced charge state of the iron salt battery. The HER is pH dependent. At lower pH values, the concentration of H$^+$ is high, which increases the kinetics of the side reaction. Over time, the pH increases on the negative side. At a pH $\geq$ ~4, insoluble iron hydroxide forms and deposits onto the separator. This leads to increased resistance of ionic transfer, reduced coulombic and voltaic efficiency and ultimately cell failure.

**Description of the Invention**

It is the object of the present invention to overcome or alleviate at least some of the above-mentioned disadvantages. The present application provides a composition of an iron salt battery electrolyte.

Independent claim 1 relates to an electrolyte for use in all-iron redox flow batteries, comprising an aqueous solution of an Fe$^{2+}$ salt; a first cation additive being aluminium Al$^{3+}$; and a second cation additive selected from the group consisting of Na$^+$, K$^+$, Ca$^{2+}$, Mg$^{2+}$ or NH$_4^+$.

The addition of a second cation additive of any one of Na$^+$, K$^+$, Ca$^{2+}$, Mg$^{2+}$ or NH$_4^+$ has the advantage that in combination with the aluminum cation additive, the rate of increase of the pH value during cycling (charging/discharging cycles) can be reduced, in particular with the aluminum cation additive, while a good energy efficiency (EE) of the ISB can be obtained, in particular with the second cation additive (metallic cation additive Na$^+$, K$^+$, Ca$^{2+}$, Mg$^{2+}$ or ammonium cation additive NH$_4^+$). The EE is defined as the energy extracted during discharge divided by the energy input during charge.

In general, the aluminum cation additive is the one responsible for limiting the pH increase (reducing the rate of the hydrogen evolution reaction) and the other cation additives act as supporting salts to improve the overall battery performance, including a good energy efficiency of the battery.

In a development of the electrolyte according to the invention, the electrolyte composition further comprises a third cation additive selected from the group consisting of $Na^+$, $K^+$, $Ca^{2+}$, $Mg^{2+}$ or $NH_4^+$, the third cation additive being different from the second cation additive. The third cation additive further limits the pH increase and improves the overall battery performance.

This can be further developed in that the electrolyte further comprises a fourth cation additive selected from the group consisting of $Na^+$, $K^+$, $Ca^{2+}$, $Mg^{2+}$ or $NH_4^+$, the fourth cation additive being different from the second and third cation additives. The fourth cation additive further limits the pH increase and improves the overall battery performance.

In another development, the electrolyte further comprises any combination of cation additives, other than the second cation additive, selected from the group consisting of $Na^+$, $K^+$, $Ca^{2+}$, $Mg^{2+}$ or $NH_4^+$, in particular all of $Na^+$, $K^+$, $Ca^{2+}$, $Mg^{2+}$ and $NH_4^+$.

According to a further development, the $Fe^{2+}$ salt is at least one of $FeCl_2$, $FeSO_4$, $FeNO_3$ or iron acetate. The iron acetate may be in the form of iron(II) acetate (ferric acetate), $Fe(CH_3COO)_2$, or iron(III) acetate (ferrous acetate), $[Fe_3O(OAc)_6(H_2O)_3]^+$ (OAc⁻ is $CH_3CO_2^-$), or a combination thereof.

In another development of the electrolyte the aluminum is comprised in the form of an $Al^{3+}$ salt being at least one of $AlCl_3$, $Al_2(SO_4)_3$, $Al(NO_3)_3$ or aluminum acetate. The aluminum acetate may be in the form of basic aluminium monoacetate, $(HO)_2AlCH_3CO_2$, basic aluminium diacetate, $HOAl(CH_3CO_2)_2$, or neutral aluminium triacetate, $Al(CH_3CO_2)_3$, or any combination thereof.

According to a further development, a concentration of iron ions is 1-4 M. This is a useful range for the total concentration of iron ($Fe^{2+}$ and $Fe^{3+}$) in the positive electrolyte in an iron salt battery, in particular the $Fe^{2+}$ concentration in the uncharged electrolyte.

According to another development, the electrolyte has a pH value in the range of 0 to 4. This is a useful range for the pH value of an electrolyte for an iron salt battery.

In another development, in the electrolyte the concentration of each of the cation additives is in the range of 0.01 M to 3 M. With such a concentration of the cation additives, the pH value can be kept at a low value, suitable to limit the HER in an iron salt battery during cycling.

According to a further development, the cation additives are comprised with the following concentrations: $[Al^{3+}]$ = 0.015 - 0.2 M; and each of $[Na^+]$, $[K^+]$, $[Ca^{2+}]$, $[Mg^{2+}]$ or $[NH_4^+]$, or any combination thereof = 0.05 - 3 M. With such ranges of the concentration of the cation additives, the pH value can be limited at a low value, suitable to reduce the HER rate in an iron salt battery. In particular, an excess value for the aluminum additive concentration can be avoided, while maintaining a reduced rate of pH increase during battery charging.

Further features and exemplary embodiments as well as advantages of the present invention will be explained in greater detail hereinafter with reference to the drawings. It is understood that the specific embodiments do not limit the present invention.

**Brief Description of the Drawing**

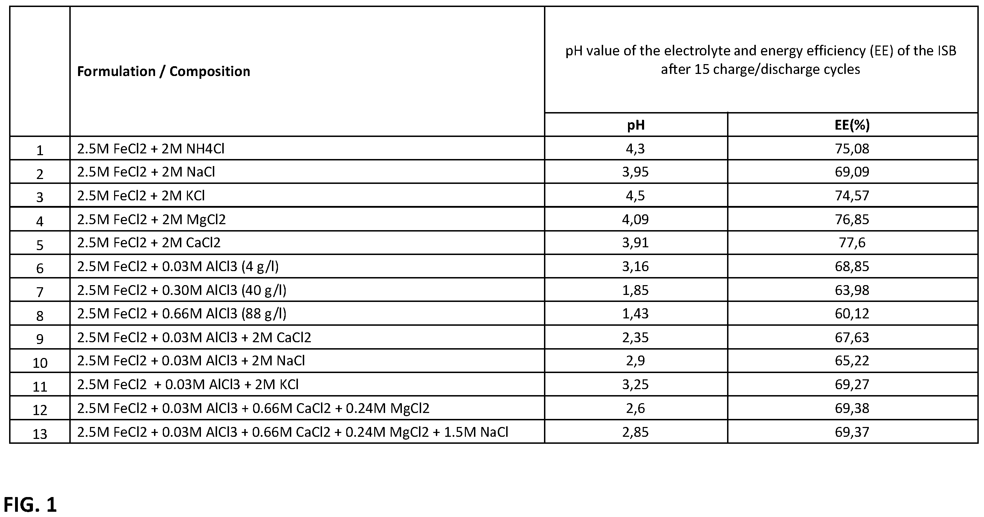

Fig. 1      shows a table of pH values of the electrolyte and energy efficiencies (EE) of the ISB after 15 full cycles of charging/discharging for different formulations / compositions of the electrolyte.

**Embodiments**

The invention is described in detail for the following embodiments with respect to the accompanying drawing.

Fig. 1 shows a table of pH values of the electrolyte and energy efficiencies (EE) of the ISB for different formulations / compositions of the electrolyte after 15 full cycles of charging/discharging. Each charging/discharging cycle lasted 2 hours. The EE is defined as the energy extracted during discharging divided by the energy input during charging. The EE was determined for each cycle and then averaged over the 15 cycles. This average EE (in percent) is shown in the table.

The table of Fig. 1 shows formulations / compositions of tested electrolytes that all comprise 2.5M $FeCl_2$. The initial pH value for all formulations / compositions was pH = 1.

In lines 1 to 5 of the table, the included additives are respectively 2M $NH_4Cl$, 2M NaCl, 2M KCl, 2M $MgCl_2$, and 2M $CaCl_2$. The pH values after 15 cycles increased to be within a range of about 3.9 to 4.5. The respective EE in the last charge/discharge cycle is in the range of about 69% to 77%.

In lines 6 to 8 of the table, the additive is always $AlCl_3$ but with different molarity, namely 0.03M $AlCl_3$ (4 g/l), 0.3M $AlCl_3$ (40 g/l), and 0.66M $AlCl_3$ (88 g/l). It can be seen that the increase of the pH value is reduced for higher concentrations

of AlCl$_3$, in particular pH = 1.4 for the highest molarity of 0.66M AlCl$_3$, which is advantageous to reduce the HER, however at the expense of a reduced EE, dropping to about 60% for the highest molarity of 0.66M AlCl$_3$.

In lines 9 to 11, the electrolyte includes 0.03M AlCl$_3$ (4 g/l), as in line 6 of the table, but now includes a second additive, namely, 2M CaCl$_2$, 2M NaCl, and 2M KCl, respectively. Compared to pH = 3.16 and EE = 68.85 % in line 6, the pH values in lines 9 to 11 are 2.35, 2.9, and 3.25, respectively, and the EE is 67.63 %, 65.22 %, and 69.27 %, respectively. Accordingly, the increase of the pH values is further limited for CaCl$_2$ and NaCl, without much loss of EE, if any.

Line 12 of the table shows the results for 3 additives, namely 0.03M AlCl$_3$, 0.66M CaCl$_2$, and 0.24M MgCl$_2$. The increase of the pH value is reduced, such that it results in pH = 2.6, while the EE remains at a comparably high value of 69.38 %.

Line 13 of the table shows the results for a fourth additive, namely 1.5M NaCl, in addition to the composition of line 12. The increase of the pH value is limited, such that it results in pH = 2.85, while the EE remains at a comparably high value of 69.37 %, similar to line 12.

From these results, the general conclusion can be drawn that the aluminum cation additive is the one responsible to limit the increase of the pH value (i.e., reducing the rate of the HER) and the other cation additives contribute to improve the overall battery performance, including maintaining a good energy efficiency of the battery.

The embodiments are only exemplary and the full scope of the present invention is defined by the claims.

**Claims**

1. An electrolyte for use in an all-iron redox flow battery, comprising:

   an aqueous solution of an Fe$^{2+}$ salt;
   a first cation additive being aluminium Al$^{3+}$; and
   a second cation additive selected from the group consisting of Na$^+$, K$^+$, Ca$^{2+}$, Mg$^{2+}$ or NH$_4^+$.

2. The electrolyte according to claim 1, further comprising:
   a third cation additive selected from the group consisting of Na$^+$, K$^+$, Ca$^{2+}$, Mg$^{2+}$ or NH$_4^+$, the third cation additive being different from the second cation additive.

3. The electrolyte according to claim 2, further comprising:
   a fourth cation additive selected from the group consisting of Na$^+$, K$^+$, Ca$^{2+}$, Mg$^{2+}$ or NH$_4^+$, the fourth cation additive being different from the second and third cation additives.

4. The electrolyte according to any one of claims 1 to 3, further comprising:
   any combination of cation additives, other than the second cation additive, selected from the group consisting of Na$^+$, K$^+$, Ca$^{2+}$, Mg$^{2+}$ or NH$_4^+$.

5. The electrolyte according to any one of claims 1 to 4, wherein the Fe$^{2+}$ salt is at least one of FeCl$_2$, FeSO$_4$, FeNO$_3$ or Fe(CH$_3$COO)$_2$.

6. The electrolyte according to any one of claims 1 to 5, wherein the aluminum is comprised in the form of an Al$^{3+}$ salt being at least one of AlCl$_3$, Al$_2$(SO$_4$)$_3$, Al(NO$_3$)$_3$ or aluminum acetate.

7. The electrolyte according to any one of claims 1 to 6, wherein a concentration of iron ions is 1-4 M.

8. The electrolyte according to any one of claims 1 to 7, wherein the electrolyte has a pH value in the range of 0 to 4.

9. The electrolyte according to any one of claims 1 to 8, wherein the concentration of each of the cation additives is in the range of 0.01 M to 3 M.

10. The electrolyte according to any one of claims 1 to 9, wherein the cation additives are comprised with the following concentrations:

$$[Al^{3+}] = 0.015 - 0.2 \text{ M};$$

; and
each of [Na$^+$], [K$^+$], [Ca$^{2+}$], [Mg$^{2+}$] or [NH$_4$$^+$], or any combination thereof = 0.05 - 3 M.

| | Formulation / Composition | pH value of the electrolyte and energy efficiency (EE) of the ISB after 15 charge/discharge cycles | |
|---|---|---|---|
| | | pH | EE(%) |
| 1 | 2.5M FeCl2 + 2M NH4Cl | 4,3 | 75,08 |
| 2 | 2.5M FeCl2 + 2M NaCl | 3,95 | 69,09 |
| 3 | 2.5M FeCl2 + 2M KCl | 4,5 | 74,57 |
| 4 | 2.5M FeCl2 + 2M MgCl2 | 4,09 | 76,85 |
| 5 | 2.5M FeCl2 + 2M CaCl2 | 3,91 | 77,6 |
| 6 | 2.5M FeCl2 + 0.03M AlCl3 (4 g/l) | 3,16 | 68,85 |
| 7 | 2.5M FeCl2 + 0.30M AlCl3 (40 g/l) | 1,85 | 63,98 |
| 8 | 2.5M FeCl2 + 0.66M AlCl3 (88 g/l) | 1,43 | 60,12 |
| 9 | 2.5M FeCl2 + 0.03M AlCl3 + 2M CaCl2 | 2,35 | 67,63 |
| 10 | 2.5M FeCl2 + 0.03M AlCl3 + 2M NaCl | 2,9 | 65,22 |
| 11 | 2.5M FeCl2 + 0.03M AlCl3 + 2M KCl | 3,25 | 69,27 |
| 12 | 2.5M FeCl2 + 0.03M AlCl3 + 0.66M CaCl2 + 0.24M MgCl2 | 2,6 | 69,38 |
| 13 | 2.5M FeCl2 + 0.03M AlCl3 + 0.66M CaCl2 + 0.24M MgCl2 + 1.5M NaCl | 2,85 | 69,37 |

**FIG. 1**

Europäisches
Patentamt

European
Patent Office

Office européen
des brevets

**EUROPEAN SEARCH REPORT**

Application Number

EP 24 19 9656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 078 707 B1 (GENERBOX S R L [IT]) 6 December 2023 (2023-12-06) | 1-10 | INV. H01M8/18 |
| Y | * paragraphs [0073], [0083], [0089] * | 8 | |
| A | CN 113 328 124 A (INST METAL RESEARCH CAS) 31 August 2021 (2021-08-31) * paragraphs [0002], [0007] * | 1-10 | |
| X | CN 102 332 596 A (UNIV SHANGHAI JIAOTONG) 25 January 2012 (2012-01-25) | 1-7,9,10 | |
| Y | * paragraphs [0006], [0007], [0008], [0016], [0032]; claim 2 * | 8 | |
| A | US 10 680 263 B2 (ESS TECHNOLOGY INC [US]) 9 June 2020 (2020-06-09) * column 4, lines 23-56 * | 1 | |

**TECHNICAL FIELDS SEARCHED (IPC)**

H01M

The present search report has been drawn up for all claims

| Place of search | Date of completion of the search | Examiner |
|---|---|---|
| The Hague | 5 February 2025 | Ferreira Marinha, D |

EPO FORM 1503 03.82 (P04C01)

**EP 4 712 177 A1**

## ANNEX TO THE EUROPEAN SEARCH REPORT
## ON EUROPEAN PATENT APPLICATION NO.

EP 24 19 9656

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | | | Publication date | Patent family member(s) | | | Publication date |
|---|---|---|---|---|---|---|---|
| EP 4078707 | B1 | | 06-12-2023 | EP | 4078707 | A1 | 26-10-2022 |
| | | | | WO | 2021121640 | A1 | 24-06-2021 |
| CN 113328124 | A | | 31-08-2021 | NONE | | | |
| CN 102332596 | A | | 25-01-2012 | NONE | | | |
| US 10680263 | B2 | | 09-06-2020 | AU | 2018258692 | A1 | 19-09-2019 |
| | | | | AU | 2023248118 | A1 | 02-11-2023 |
| | | | | CN | 110574199 | A | 13-12-2019 |
| | | | | EP | 3574543 | A1 | 04-12-2019 |
| | | | | JP | 7121043 | B2 | 17-08-2022 |
| | | | | JP | 2020518950 | A | 25-06-2020 |
| | | | | US | 2018316032 | A1 | 01-11-2018 |
| | | | | WO | 2018201092 | A1 | 01-11-2018 |

EPO FORM P0459

For more details about this annex : see Official Journal of the European Patent Office, No. 12/82

8